## Europäisches Patentamt
## European Patent Office
## Office européen des brevets

(19)

(11) Numéro de publication: **0 101 121**
**B1**

(12) **FASCICULE DE BREVET EUROPÉEN**

(45) Date de publication du fascicule du brevet:
**08.04.87**

(51) Int. Cl.⁴: **H 02 M 7/537**

(21) Numéro de dépôt: **83201112.6**

(22) Date de dépôt: **28.07.83**

(54) **Dispositifs statiques de conversion d'énergie électrique à semi-conducteurs.**

(30) Priorité: **13.08.82 FR 8214192**

(43) Date de publication de la demande:
**22.02.84 Bulletin 84/8**

(45) Mention de la délivrance du brevet:
**08.04.87 Bulletin 87/15**

(84) Etats contractants désignés:
**AT BE CH DE FR GB IT LI LU NL SE**

(56) Documents cité:
**DE-A-2 421 125**
**FR-A-2 441 290**
**GB-A-2 071 434**
**US-A-3 875 496**

(73) Titulaire: **ANVAR Agence Nationale de Valorisation de la Recherche, 43, rue Caumartin, F-75436 Paris Cédex 09 (FR)**

(72) Inventeur: **Foch, Henri, 33 rue Jean Tallien, F-31200 Toulouse (FR)**
Inventeur: **Roux, Jaques, 23 route d'Albi, F-31200 Toulouse (FR)**

(74) Mandataire: **Barre, Philippe, Cabinet Barre- Gatti-Laforgue 95 rue des Amidonniers, F-31069 Toulouse Cédex (FR)**

EP 0 101 121 B1

LIBER, STOCKHOLM 1987

## Description

L'invention concerne un convertisseur statique d'énergie électrique perfectionné.

On sait déjà associer divers types de filtres à des convertisseurs afin d'éliminer les harmoniques de tension ou de courant qu'ils engendrent. Par exemple, le brevet GB n° 2 071 434 décrit un onduleur à trois états de sortie, attaquant un circuit résonnant ayant pour fonction d'opérer un filtrage en bloquant les harmoniques issus de la tension de l'onduleur. Le brevet DE n° 2 421 125 décrit un ensemble convertisseur qui possède des inductances d'interconnexion dont le dimensionnement est prévu pour assurer un filtrage des courants de circulation.

La présente invention a un objectif totalement différent et vise à perfectionner le convertisseur statique décrit dans le brevet français n° 2 441 290, en vue de généraliser son utilisation à tous types de charge.

Il a été décrit dans ce dernier brevet un convertisseur qui est schematisé à la figure 1 des dessins annexés et sera-désigné globalement ci-après par la lettre grecque Γ. Ce convertisseur a pour avantage essentiel de supprimer totalement les pertes énergétiques lors des commutations d'amorçage. Il utilise des composants de puissance à semi-conducteurs, à blocage commandé, qui, dans les brevets sus-évoqués, sont désignés par "transistors de puissance"; afin d'avoir une terminologie plus adaptée, on désignera ci-après ces composants par "interrupteurs statiques à blocage commandé", cette désignation visant tout composant qui répond à la définition suivante: "composant électronique statique

. possédant une électrode de commande (base, grille gachette...) qui sera désignée ci-après par "base" (afin de simplifier la terminologie et par référence avec la désignation utilisée dans les transistors), une électrode de puissance (émetteur, source, cathode...) désignée ci-après par "émetteur" et une seconde électrode de puissance (collecteur, drain, anode...) désignée ci-après par "collecteur",

. susceptible de présenter deux états, un état de conduction caractérisé par une faible chute de la tension entre le collecteur et l'émetteur ($V_{CE}$), et un état de blocage caractérisé par un faible courant de fuite entre émetteur et collecteur,

. le changement d'état étant provocué par commande de la base".

Bien entendu, dans la plupart des cas, ce sont des transistors de puissance (bipolaires ou "M.O.S.") qui seront utilisés mais cela peut être également des thyristors ou d'autres composants. Il est à noter que, pour élargir la gamme de tension dans lequel le dispositif est utilisable (sans réduction de ses performances en courant), il est avantageux d'utiliser des transistors ayant une tenue en tension $V_{CEX}$ supérieure à leur tenue en tension $V_{CEO}$ comme cela est indiqué dans les brevets sus-évoqués. Il convient de rappeler que la tenue en tension $V_{CEX}$ se définit comme la tenue en tension du transistor à courant collecteur nul et base polarisée négativement, cependant que la tenue en tension $V_{CEO}$ se définit comme la tenue en tension, base ouverte.

Le convertisseur (Γ) que vise à perfectionner la présente invention est essentiellement composé:

. d'au moins un étage de puissance doté, d'une part, de deux interrupteurs statiques à blocage commandé ayant, chacun, un collecteur, une base et un émetteur, d'autre part, d'un circuit d'aide à la commutation associé à chaque interrupteur statique pour dériver son courant collecteur au cours des commutations de blocage de celui-ci, les deux interrupteurs statiques étant agencés en demi-pont aux bornes d'une alimentation de puissance (+E,-E),

. d'un étage de commande adapté pour engendrer pour chaque interrupteur statique un signal de commande Sc de forme appropriée à la conversion à réaliser,

. d'un étage intermédiaire de traitement, associé à chaque interrupteur statique et possédant une entrée reliée à l'étage de commande pour recevoir le signal Sc, une autre entrée reliée à l'étage de puissance pour detecter la tension collecteur/émetteur $V_{CE}$ de l'interrupteur statique considéré et une sortie reliée à la base dudit interrupteur statique pour déclencher les commutations de celui-ci, ledit étage intermédiaire de traitement étant adapté pour piloter la base dudit interrupteur de façon à rendre l'interrupteur conducteur dans le seul cas où, à la fois, le signal de commande Sc présente une valeur correspondant à une mise en conduction et la tension $V_{CE}$ se trouve voisine de zéro et de façon à assurer une polarisation inverse de ladite base d'interrupteur dans tous les autres cas en vue de bloquer l'interrupteur.

On pourra se reporter aux brevets évoqués ci-dessus pour plus de précision sur ce convertisseur.

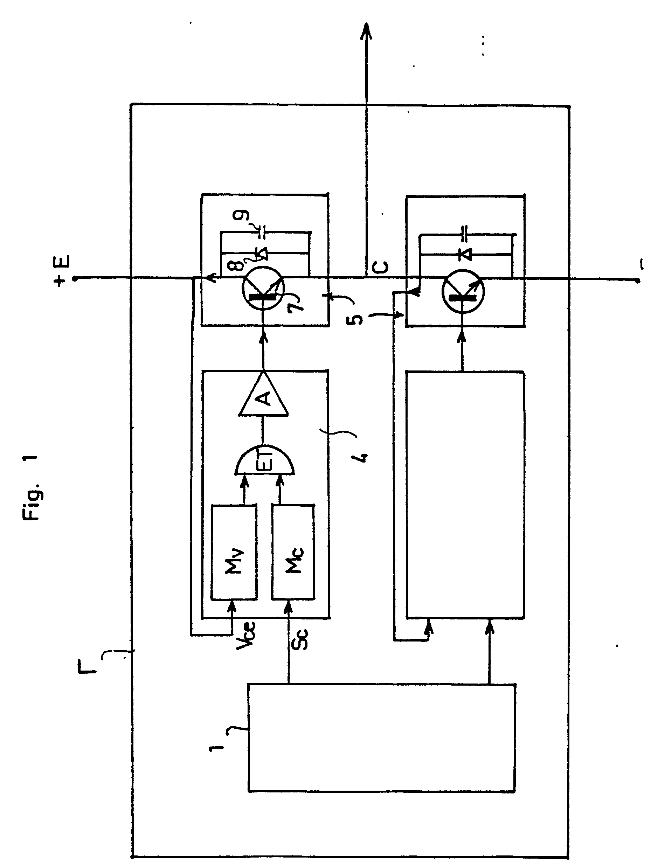

La figure 1 des dessins annexés schématise la structure générale d'un tel convertisseur. On retrouve sur cette figure l'étage de puissance 5 pourvu de deux interrupteurs statiques à blocage commandé tels que 7, les étages intermédiaires de traitement 4 associé à chaque interrupteur 7, et l'étage de commande 1 délivrant le signal Sc pour chaque interrupteur statique. Ce signal Sc présente notamment la forme de trains d'impulsions représentant des ordres de blocage et ordres de mise en conduction successifs de l'interrupteur statique concerné.

A chaque interrupteur statique de l'étage de puissance sont associés une diode 8 de récupération d'énergie et un circuit d'aide à la commutation pour dériver le courant collecteur de l'interrupteur statique au cours des commutations de blocage de celui-ci; ce circuit d'aide à la commutation peut être formé par un condensateur 9 disposé en parallèle entre l'émetteur et le collecteur de l'interrupteur 7.

Selon un mode de réalisation du convertisseur décrit dans les brevets précités, chaque étage intermédiaire 4 peut en particulier comprendre:

- un circuit Mv de mise en forme de la tension $V_{CE}$, connecté à l'interrupteur statique considéré et adapté pour fournir un signal à deux états, l'un correspondant à une tension $V_{CE}$ voisine de 0, l'autre à une tension différente,

- un circuit Mc de mise en forme du signal de commande Sc adapté pour fournir un signal à deux états, l'un correspondant aux valeurs de mise en conduction, l'autre aux valeurs de blocage de ce signal de commande,

- une unité logique ET, reliée aux deux circuits Mv et Mc et adaptée pour fournir un signal à deux états, un état 1 correspondant à la conduction de l'interrupteur statique pour une tension $V_{CE}$ dudit interrupteur $\cong 0$ et pour un signal Sc ayant une valeur de mise en conduction, et un état 2 correspondant au blocage dudit interrupteur si l'une des deux conditions ci-dessus n'est pas satisfaite,

- et un circuit d'adaptation A, relié à l'unité logique ET et à la base de l'interrupteur considéré pour fournir vers cette base un courant d'alimentation tel que la conduction dudit interrupteur s'effectue pour l'état 1 du signal issu de l'unité logique ET et que le blocage s'effectue pour l'état 2 de ce signal.

La présente invention vise à perfectionner le convertisseur ci-dessus évoqué.

Dans un tel convertisseur, il y a, non pas amorçage forcé de l'interrupteur statique (comme cela se passe dans les convertisseurs connus) mais, au contraire, un amorçage naturel que l'on vient simplement valider lorsque la tension $V_{CE}$ s'est annulée de façon spontanée Cette caractéristique supprime les pertes énergétiques lors des commutations.

Toutefois, pour présenter de telles propriétés le convertisseur doit alimenter une charge à caractère inductif qui autorise la commutation de l'interrupteur statique. Par exemple, en cas de charge capacitive, le système ne peut plus commuter, du fait que la tension $V_{CE}$ ne s'annule pas spontanément à chaque cycle.

L'objectif essentiel de la présente invention est de permettre un fonctionnement du convertisseur dans tous les cas, quelle que soit la charge sur laquelle le convertisseur débite; ainsi le convertisseur sera apte à alimenter des charges beaucoup plus diversifiées, aussi bien par leur nature (par exemple charges à cosinus $\varphi$ avant) que par le mode d'alimentation qu'elles exigent (par exemple charges alimentées en modulation de largeur d'impulsions, en alternatif ou en continu).

Un autre objectif de l'invention est d'accroître considérablement la sécurité de fonctionnement du ou des convertisseurs $\Gamma$ en cas de surcharge.

Selon l'invention, un étage supplémentaire de sortie est intercalé entre un ou des convertisseurs $\Gamma$ tels que définis précédemment, et la charge à alimenter; cet étage supplémentaire est adapté pour appeler à la sortie du ou des étages de puissance du ou des convertisseurs $\Gamma$ un courant alternatif changeant de signe à chaque commutation des interrupteurs statiques, ledit courant alternatif présentant à chaque alternance un signe correspondant au sens direct de circulation collecteur/émetteur dans chaque interrupteur statique à l'instant d'apparition, dans le signal de commande Sc, d'un ordre de blocage dudit interrupteur statique.

Chaque convertisseur $\Gamma$ peut comporter un étage supplémentaire de sortie qui lui est propre. Cet étage combine alors deux circuits, l'un à caractère inductif, l'autre à caractère capacitif.

Le circuit à caractère inductif est connecté en série entre, d'une part, l'étage de puissance au point commun des deux interrupteurs statiques montés en demi-pont et, d'autre part, la sortie appelée à être reliée à une charge.

Le circuit à caractère capacitif est connecté en parallèle entre la sortie et un point de référence de tension pris par rapport à l'alimentation de puissance.

Ces circuits sont dimensionnés de façon à appeler le courant alternatif défini plus haut à la sortie de l'étage de puissance du convertisseur.

Le dispositif peut également comprendre des convertisseurs ($\Gamma$) groupés par paires. Les deux convertisseurs d'une paire sont agencés en pont aux bornes d'un étage supplémentaire commun de sortie, de sorte que chaque convertisseur se présente vis-à-vis de l'autre convertisseur comme un circuit à caractère capacitif. L'étage supplémentaire comporte alors au moins un circuit inductif connecté et dimensionné comme précédemment défini.

Le dispositif de conversion ainsi réalisé permet d'alimenter toute charge de quelque nature que ce soit (capacitive, inductive, résistive) pour lui délivrer toute forme d'onde électrique souhaitée, compatible avec la nature de ladite charge. On peut ainsi obtenir un dispositif de conversion remplissant les fonctions suivantes:

- hacheur à courant continu, délivrant une tension continue d'amplitude réglable,

- onduleur de tension, alimentant en courant alternatif une charge de déphasage quelconque,

- onduleur de tension, délivrant une onde de tension à modulation de largeur d'impulsions.

Dans tutes ces applications, l'étage supplémentaire fournit à chaque convertisseur $\Gamma$ les conditions de commutation que les charges seules seraient incapables de lui procurer; en effet cet étage impose à la sortie du ou des convertisseurs $\Gamma$ (au niveau des points communs C des paires d'interrupteurs statiques) un courant changeant de signe à chaque commutation de tension dans le sens approprié pour autoriser cette commutation, alors que le courant de charge n'est pas compatible avec lesdites commutations.

L'invention sera mieux comprise à la lecture de la description qui suit en référence aux dessins annexés qui en présentent à titre non limitatif plusieurs modes de réalisation; sur ces dessins:

- la figure 1 déjà commentée est un schéma de rappel de la structure générale du convertisseur de base Γ tel que défini dans les brevets évoqués précédemment,

- la figure 2 est un schéma électrique d'un dispositif de conversion conforme à un premier mode de réalisation,
- les figures 3a, 3b et 3c illustrent les formes d'ondes des grandeurs caractéristiques de ce dispositif,
- la figure 4 est un schéma électrique d'un autre mode de réalisation,
- les figures 5a, 5b, 5c, 5d illustrent les formes d'ondes dans cet autre mode de réalisation,
- la figure 6 est un schéma électrique d'un troisième mode de réalisation,
- les figures 7a, 7b, 7c et 7d illustrent les formes d'ondes dans ce troisième mode de réalisation.

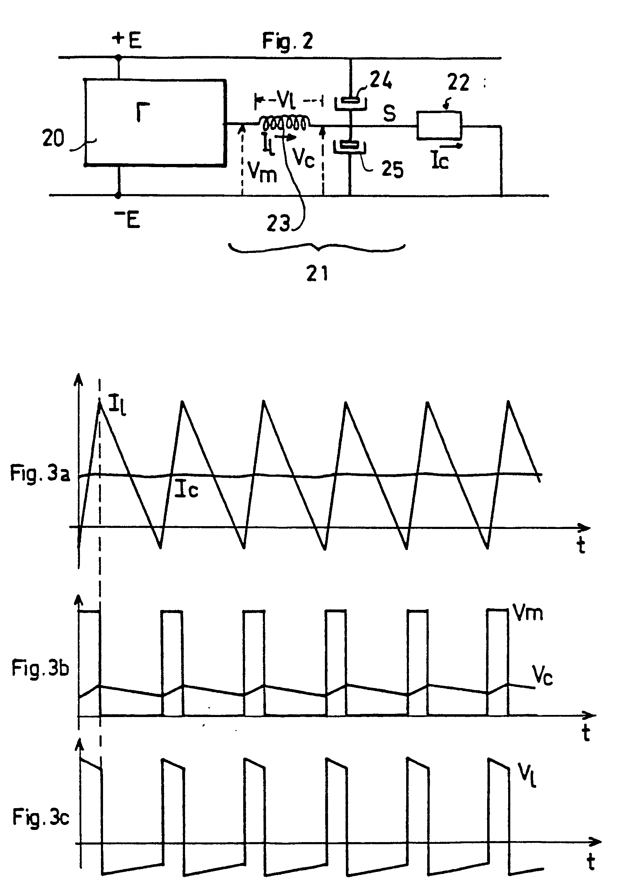

Le dispositif de conversion représenté à titre d'exemple à la figure 2 comprend un convertisseur Γ 20 de structure telle que rappelée plus haut et un étage supplémentaire de sortie 21 qui alimente une charge 22.

L'étage 21 comprend:
- une inductance 23 ayant une extrémité connectée à la sortie des étages de puissance 5 du convertisseur Γ (au point commun C des paires d'interrupterus statiques qui sont en l'exemple des transistors de puissance montés en demi-pont) et une autre extrémité constituant la sortie S du dispositif, reliée à la charge 22,
- deux condensateurs 24 et 25, chacun connecté entre la sortie S du dispositif et les bornes +E et -E de l'alimentation de puissance du convertisseur Γ.

Il est à noter que les condensateurs 24 et 25 peuvent être reliés à d'autres points de référence de tension, pris par rapport à l'alimentation de puissance. De plus, il est possible de ne prévoir qu'un seul condensateur, notamment dans le cas où l'alimentation de puissance peut être considérée comme une source parfaite de tension.

L'étage 21 appelle à la sortie du convertisseur Γ un courant ondulé; l'inductance et les condensateurs ont des valeurs adaptées pour que ce courant soit un courant alternatif changeant de signe à chaque commutation successive du convertisseur Γ. A cet effet:
. l'inductance 23 présente, à la fréquence des commutations du convertisseur Γ, une impédance de valeur faible adaptée pour provoquer les changements de signe du courant alternatif,
. les condensateurs 24, 25 ont une capacité de valeur élevée telle que leur impédance à la fréquence des commutations du convertisseur Γ soit négligeable par rapport à l'impédance de charge.

Les figures 3a, 3b et 3c illustrent une forme possible du courant Ic traversant la charge 22, du courant Ie traversant l'inductance 23, de la tension Vm à la sortie du convertisseur Γ, de la tension Vc à la sortie S du dispositif, enfin de la tension Ve aux bornes de l'inductance.

Cette tension Ve est une tension alternative à valeur moyenne nulle et il lui correspond dans l'inductance 23 un courant alternatif le changeant de signe à chaque commutation du convertisseur Γ et dont la valeur moyenne est égale à celle du courant de charge Ic.

De la sorte, le fonctionnement du convertisseur Γ est indépendant de la nature de la charge et de la forme précise du courant qui la traverse; en effet toute charge vue par le convertisseur Γ à travers l'étage supplémentaire 21 devient compatible avec les conditions de commutation dudit convertisseur Γ.

Il est en outre à noter que le convertisseur Γ est automatiquement protégé contre les surintensités que pourrait engendrer la charge; en effet en cas d'accroissement exagéré du courant Ic, le courant Ie (dont Ic est la valeur moyenne) ne présente plus de changements de signe et le fonctionnement du convertisseur Γ se trouve bloqué, ce qui assure la protection de ses composants.

Le dispositif de conversion ci-dessus décrit peut en particulier être utilisé pour remplir la fonction de hacheur, réversible ou non.

Ce dispositif peut être associé en pont par rapport à la charge, avec un ou plusieurs dispositifs analogues pour constituer un ensemble de conversion pouvant en particulier remplir la fonction d'onduleur basse fréquence.

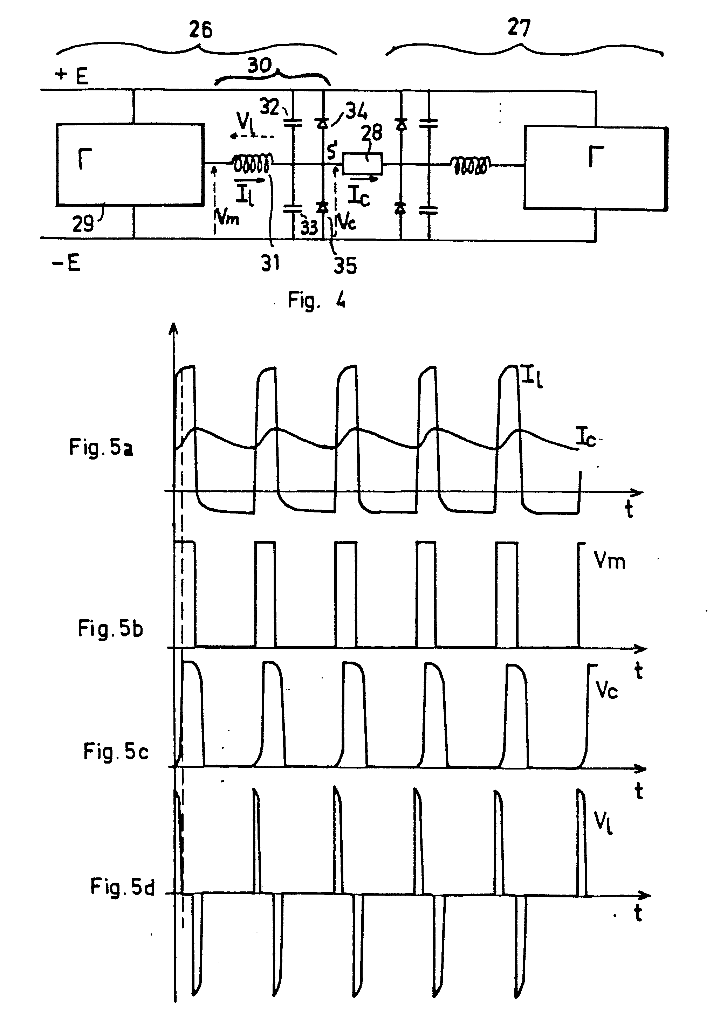

Par ailleurs, la figure 4 représente un ensemble de conversion constitué en l'exemple de deux dispositifs identiques 26 et 27 montés en pont monophasé par rapport à une charge 28.

Chaque dispositif 26 ou 27 comprend un convertisseur Γ 29 et un étage supplémentaire de sortie 30. Cet étage supplémentaire comporte une inductance 31 et deux condensateurs 32 et 33, agencés comme précédemment; de plus cet étage comprend:
. une première diode 34 ayant une anode connectée à la sortie (S') du dispositif et une cathode connectée à la borne positive (+E) de l'alimentation de puissance,
. une seconde diode 35 ayant une anode connectée à la borne négative (-E) de l'alimentation de puissance et une cathode connectée à la sortie (S') du dispositif.

Comme précédemment, la valeur de l'inductance 31 est suffisamment faible pour provoquer les changements de signe du courant alternatif.

Par contre dans ce mode de réalisation, les condensateurs peuvent avoir une capacité de valeur beaucoup plus faible que précédemment car leur fonction est essentiellement dans ce montage, de retarder les commutations de la tension de sortie Vc par rapport aux commutations de la tension Vm à la sortie du convertisseur Γ (alors que, dans le montage précédent, les condensateurs ont pour fonction de lisser totalement la tension de sortie).

Les figures 5a, 5b, 5c et 5d illustrent une forme possible du courant Ic traversant la charge 28, du courant Ie traversant l'inductance 31, de la tension Vm à la sortie du convertisseur Γ, de la tension Vc à la sortie S' du dispositif, enfin de la tension Ve aux bornes de l'inductance 31.

Les mêmes commentaires que précédemment peuvent être faits.

Les capacités 32 et 33 pouvant avoir des valeurs plus faibles, un tel dispositif présente des temps de réponse susceptibles d'être beaucoup plus courts, de sorte qu'il peut faire fonction d'onduleur haute fréquence, modulé ou non.

L'ensemble de conversion en pont constitué par les deux dispositifs 26 et 27 permet de réaliser un onduleur dont la fréquence peut varier sur une très large plage.

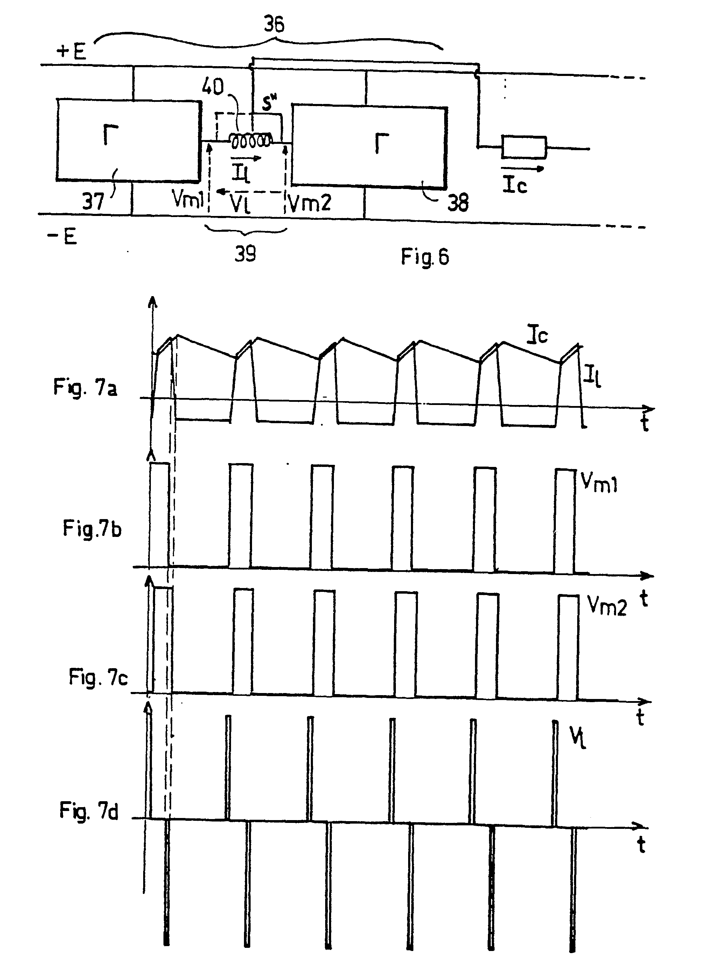

Par ailleurs, la figure 6 représente un autre ensemble de conversion constitué comme précédemment de deux dispositifs tels que 36 (un seul ayant été représenté à la figure 6).

Chaque dispositif comprend deux convertisseurs Γ 37 et 38 agencés en pont aux bornes d'un étage supplémentaire de sortie 39, ayant une fonction analogue à celle des étages supplémentaires déjà décrits.

En cet exemple, cet étage 39 comprend une inductance 40 montée dans la diagonale du pont; une des extrémités de cette inductance ou une prise intermédiaire constitue la sortie (S'') du dispositif appelée à être reliée à une charge.

L'inductance 40 présente, à la fréquence des commutations du convertisseur Γ, une impédance de valeur faible adaptée pour provoquer les changements de signe du courant alternatif.

Le second convertisseur Γ 38 joue dans ce montage un rôle similaire à celui des condensateurs 32 et 33 du montage précédent; cependant ce convertisseur 38 permet de doser le retard de commutations entre les tensions $V_{m1}$ et $V_{m2}$ aux sorties des deux convertisseurs Γ 37 et 38.

Les figures 7a, 7b, 7c et 7d illustrent la forme des grandeurs Ic, Ie, $V_{m1}$, $V_{m2}$ et $V_e$. La faculté susévoquée de doser le retard à la commutation entre les deux convertisseurs Γ permet de limiter l'amplitude du courant I traversant les étages de puissance desdits convertisseurs. Les mêmes commentaires que précédemment, concernant la diversité des charges et la protection contre les surintensités peuvent être faits à propos de cet ensemble.

Les applications sont les mêmes que celles du montage précédent mais le dimensionnement en courant des semi-conducteurs de puissance peut être notablement réduit.

**Revendications**

1/ - Dispositif statique de conversion d'énergie électrique à semi-conducteurs, comprenant au moins un convertisseur (Γ) composé:

. d'au moins un étage de-puissance doté (5), d'une part, de deux interrupteurs statiques à blocage commandé (7) ayant chacun, un collecteur, une base et un émetteur, d'autre part d'un circuit d'aide à la commutation (9) associé à chaque interrupteur statique pour dériver son courant collecteur au cours des commutations de blocage de celui-ci, les deux interrupteurs statiques érant agencés en demi-pont aux bornes d'une alimentation de puissance (+E, -E),

. d'un étage de commande (1) adapté pour engendrer pour chaque interrupteur statique un signal de commande Sc de forme appropriée à la conversion à réaliser,

. d'un étage intermédiaire de traitement (4), associé à chaque interrupteur statique et possédant une entrée reliée à l'étage de commande pour recevoir le signal Sc, une autre entrée reliée à l'étage de puissance pour détecter la tension collecteur/émetteur $V_{CE}$ de l'interrupteur statique considéré et une sortie reliée à la base dudit interrupteur statique pour déclencher les commutations de ceiui-ci, ledit étage intermédiaire de traitement étant adapté pour piloter la base dudit interrupteur de façon à rendre l'interrupteur conducteur dans le seul cas où, à la fois, le signal de commande Sc présente une valeur correspondant à une mise en conduction et la tension $V_{CE}$ se trouve voisine de zéro et de façon à assurer une polarisation inverse de ladite base d'interrupteur dans tous les autres cas en vue de bloquer l'interrupteur,

ledit dispositif statique de conversion étant caractérisé en ce que chaque convertisseur (Γ) est pourvu d'un étage supplémentaire de sortie (21, 30), combinant deux circuits, l'un à caractère inductif (23, 31), l'autre à caractère capacitif (24, 25; 32, 33):

- le circuit à caractère inductif étant connecté en série entre, d'une part, l'étage de puissance (5) au point commun (c) des deux interrupteurs statiques (7) montés en demi-pont et, d'autre part, la sortie (S, S') appelée à être réliée à une charge (22, 28),

- le circuit à caractère capacitif étant connecté en parallèle entre la sortie (S, S') et un point de référence de tension pris par rapport à l'alimentation de puissance (+E, -E),

- lesdits circuit à caractère inductif et circuit à caractère capacitif étant dimensionnés de façon à appeler, à la sortie de l'étage de puissance (5), un courant alternatif:

. changeant de signe entre chaque commutation des interrupteurs statiques (7),

. et présentant à chaque alternance le signe correspondant au sens direct de circulation collecteur/émetteur dans chaque interrupteur statique à l'instant de son blocaqe.

2/ - Dispositif de conversion selon la revendication 1, caractérisé en ce que l'étage supplémentaire de sortie (21, 30) comprend:

. une inductance (23, 31) ayant une extrémité connectée à la sortie de l'étage de puissance (5), au point commun (C) des deux interrupteurs statiques (7) montés en demi-pont, et une autre extrémité constituant la sortie (S, S') du dispositif appelée à être reliée à une charge,

. au moins un condensateur (24, 25, 32, 33), chacun connecté entre la sortie (S, S') du dispositif et un point de référence de tension pris par rapport à l'alimentation de puissance (+E, -E).

3/ - Dispositif de conversion selon la revendication 2, caractérisé en ce que chaque condensateur (24, 25, 32, 33) est connecté à un point de référence constitué par une des bornes de l'alimentation de puissance.

4/ - Dispositif de conversion selon l'une des revendications 2 ou 3, caractérisé en ce que l'inductance (23, 31) présente, à la fréquence des commutations du convertisseur (Γ), une impédance de valeur faible adaptée pour provoquer les changements de signe du courant alternatif.

5/ - Dispositif de conversion selon l'une des revendications 2, 3 ou 4, caractérisé en ce que le ou les condensateurs (24, 25) ont une capacité de valeur élevée telle que leur impédance à la fréquence des commutations du convertisseur (Γ) soit négligeable par rapport à l'impédance de charge.

6/ - Dispositif de conversion selon l'une des revendications 2, 3 ou 4, caractérisé en ce que l'étage supplémentaire de sortie (30) comprend:
. une première diode (34) ayant une anode connectée à la sortie (S') et une cathode connectée à la borne positive (+E) de l'alimentation de puissance,
. une seconde diode (35) ayant une anode connectée à la borne négative (-E) de l'alimentation de puissance et une cathode connectée à la sortie (S').

7/ - Dispositif statique de conversion d'énergie électrique à semi-conducteur comprenant au moins deux convertisseurs (Γ), chacun composé:
. d'au moins un étage de puissance doté (5), d'une part, de deux interrupteurs statiques à blocage commandé (7) ayant, chacun, un collecteur, une base et un émetteur, d'autre part d'un circuit d'aide à la commutation (9) associé à chaque interrupteur statique pour dériver son courant collecteur au cours des commutations de blocage de celui-ci, les deux interrupteurs statiques étant agencés en demi-pont aux bornes d'une alimentation de puissance (+E, -E),
. d un etage de commande (1) adapté pour engendrer pour chaque interrupteur statique un signal de commande Sc de forme appropriée à la conversion à réaliser,
. d'un étage intermédiaire de traitement (4), associé à chaque interrupteur statique et possédant une entrée reliée à l'étage de commande pour recevoir le signal Sc, une autre entrée reliée à l'étage de puissance pour détecter la tension collecteur/émetteur $V_{CE}$ de l'interrupteur statique considéré et une sortie reliée à la base dudit interrupteur statique pour déclencher les commutations de celui-ci, ledit étage intermédiaire de traitement étant adapté pour piloter la base dudit interrupteur de façon à rendre l'interrupteur conducteur dans le seul cas où, à la fois, le signal de commande Sc présente une valeur correspondant à une mise en conduction et la tension $V_{CE}$ se trouve voisine de zéro et de façon à assurer une polarisation inverse de ladite base d'interrupteur dans tous les autres cas en vue de bloquer l'interrupteur,
ledit dispositif statique de conversion étant caractérisé en ce que les deux convertisseurs (Γ) sont agencés en pont aux bornes d'un étage supplémentaire commun de sortie (39), de sorte que chaque convertisseur (Γ) se présente vis-à-vis de l'autre convertisseur comme un circuit à caractère capacitif, ledit étage supplémentaire de sortie (39) comportant au moins un circuit à caractère inductif (40) connecté en série entre, d'une part, l'étage de puissance (5) de chaque convertisseur (Γ) et, d'autre part, la sortie (S'') appelée à être reliée à une charge, ledit circuit à caractère inductif étant dimensionné de façon à appeler à la sortie des étages de puissance (5) des convertisseurs (Γ) un courant alternatif:
. changeant de signe entre chaque commutation des interrupteurs statiques (7),
. et présentant à chaque alternance le signe correspondant au sens direct de circulation collecteur/émetteur dans chaque interrupteur statique à l'instant de son blocage.

8/ - Dispositif de conversion selon la revendication 7, caractérisé en ce que l'étage supplémentaire de sortie (39) comprend une inductance (40) monté dans la diagonale du pont, une des extrémités de cette inductance ou une prise intermédiaire constituant la sortie (S'') du dispositif appelée à être reliée à une charge.

9/ - Dispositif de conversion selon la revendication 8, caractérisé en ce que l'inductance (40) présente, à la fréquence des commutations des convertisseurs (Γ), une impédance de valeur faible adaptée pour provoquer les changements de signe du courant alternatif.

**Patentansprüche**

1. Eine statische Umwandlungseinheit für elektrische Energie mit Halbleitern, die mindestens einen Umformer (Γ) mit den folgenden Stufen umfaßt:
. Mindestens einer Leistungsstufe (5) mit einerseits zwei statischen Schaltern für geregeltes Sperren (7), von denen jeder einen Kollektor, eine Basis und einen Emitter besitzt, und andererseits einem Schalthilfskreis (9), der mit jedem statischen Schalter dahingehend zusammenarbeitet, daß er seinen Kollektorstrom während der Sperrschaltoperationen des besagten Schalters abzweigt, wobei die beiden statischen Schalter an den Klemmen einer Stromversorgung (+E, -E) in Halbbrückenform angeordnet sind;
. einer Steuerstufe (1), die so beschaffen ist, daß sie für jeden statischen Schalter ein Steuersignal Sc erzeugt, und zwar in einer für die gewünschte Umformung geeigneten Form;
. eine Zwischenstufe für die Aufbereitung (4), die an jedem statischen Schalter angeschlossen ist und einen Eingang besitzt, der mit der Steuerstufe verbunden ist, um das Signal Sc zu erhalten, einen weiteren Eingang, der mit der Steuerstufe verbunden ist, um die Kollektor-/Emitterspannung $V_{CE}$ des betreffenden statischen Schalters abzunehmen, und einen Ausgang, der mit der Basis des besagten statischen Schalters verbunden ist, um dessen Schaltoperationen auszulösen, wobei infolge der Beschaffenheit der Aufbereitungszwischenstufe die Basis des besagten Schalters so gesteuert wird, daß der Schalter in dem einzigen Fall, in dem gleichzeitig das Steuersignal Sc einen dem Einschaltzustand entsprechenden Wert aufweist und die Spannung $V_{CE}$ im Bereiche von Null ist, eingeschaltet und sichergestellt wird, daß in allen anderen Fällen zwecks Sperrung des Schalters umgekehrte Polarisation der besagten Schalterbasis stattfindet, wobei

die besagte statische Umwandlungseinheit dadurch gekennzeichnet ist, daß jeder Umformer (Γ) eine Hilfsausgangsstufe (21, 30) umfaßt, die sich aus zwei Schaltkreisen, einem induktiver Art (23, 31) und einem kapazitiver Art (24, 25; 32, 33) zusammensetzt, und zwar so, daß

- der Schaltkreis induktiver Art zwischen einerseits der Leistungsstufe (5) an dem gemeinsamen Punkt (c) der beiden statischen Schalter (7) in Halbbrückenanordnung und andererseits dem Ausgang (S, S') für den Anschluß einer Last (22, 28) in Reihe geschaltet ist,

- der Schaltkreis kapazitiver Art zwischen dem Ausgang (S, S') und einem im Einklang mit der Stromversorgung (+E, -E) gewählten Spannungsbezugspunkt parallel geschaltet ist,

- die besagten Schaltkreise induktiver und kapazitiver Art so bemessen sind, daß sie am Ausgang der Leistungsstufe (5) einen Wechselstrom bedingen, wobei

. das Vorzeichen zwischen jeder Schaltoperation der statischen Schalter (7) geändert wird,

und bei jedem Wechsel das Vorzeichen geboten wird, das in jedem statischen Schalter im Augenblick der Sperrung der mathematisch positiven Richtung des Kollektor-/Emitterflusses entspricht.

2. Eine Umwandlungseinheit im Einklang mit Anspruch 1, dadurch gekennzeichnet, daß die Hilfsausgangsstufe (21, 30) die folgenden Teile umfaßt:

. Eine Induktorspule (23, 31), bei der ein Ende am gemeinsamen Punkt (C) der beiden statischen Schalter (7) in Halbbrückenanordnung am Ausgang der Leistungsstufe (5) angeschlossen ist, und das andere Ende den zum Anschluß an eine Last bestimmten Ausgang (S, S') der Einheit bildet,

. mindestens einen Kondensator (24, 25, 32, 33), wobei jeder Kondensator zwischen dem Ausgang (S, S') der Einheit und einem im Verhältnis zur Leistungsversorgung (+E, -E) gewählten Spannungsbezugspunkt angeschlossen ist.

3. Eine Umwandlungseinheit im Einklang mit Anspruch 2, dadurch gekennzeichnet, daß jeder Kondensator (24, 25, 32, 33) an einem durch eine der Klemmen der Stromversorgung gebildeten Bezugspunkt angeschlossen ist.

4. Eine Umwandlungseinheit im Einklang mit einem der Ansprüche 2 oder 3, dadurch gekennzeichnet, daß die Induktorspule (23, 31) bei der Schaltfrequenz des Umformers (Γ) eine Impedanz von niedrigem Wert bedingt, die so beschaffen ist, daß sie die Vorzeichenänderungen des Wechselstroms hervorruft.

5. Eine Umwandlungseinheit im Einklang mit einem der Ansprüche 2, 3 oder 4, dadurch gekennzeichnet, daß der bzw. die Kondensatoren (24, 25) eine Kapazität von hohem Wert aufweisen, so daß ihre Impedanz bei der Schaltfrequenz des Umformers (Γ) im Verhältnis zu der Impedanz der Last vernachlässigbar gering ist.

6. Eine Umwandlungseinheit im Einklang mit einem der Ansprüche 2, 3 oder 4, dadurch gekennzeichnet, daß die Hilfsausgangsstufe (30) die folgenden Teile umfaßt:

. Eine erste Diode (34) mit einer an dem Ausgang (S') angeschlossenen Anode und einer an der positiven Klemme (+E) der Leistungsversorgung angeschlossenen Kathode,

. eine zweite Diode (35) mit einer an der negativen Klemme (-E) der Leistungsversorgng angeschlossenen Anode und einer an dem Ausgang (S') angeschlossenen Kathode.

7. Eine statische Umwandlungseinheit für elektrische Energie mit Halbleiter, die mindestens zwei Umformer (Γ) umfaßt, von denen jeder die folgenden Teile besitzt:

. Mindestens eine Leistungsstufe (5) mit einerseits zwei statischen Schaltern für geregeltes Sperren (7), von denen jeder einen Kollektor, eine Basis und einen Emitter umfaßt, und andererseits einem Schalthilfskreis (9), der mit jedem der statischen Schalter dahingehend zusammenarbeitet, daß er seinen Kollektorstrom während der Sperrschaltoperationen des besagten Schalters abzweigt, wobei die beiden statischen Schalter an den Klemmen einer Stromversorgung (+E, -E) in Halbbrückenform angeordnet sind;

. einer Steuerstufe (1), die so beschaffen ist, daß sie für jeden statischen Schalter ein Steuersignal Sc erzeugt, und zwar in einer für die gewünschte Umformung geeigneten Form;

. eine Zwischenstufe für die Aufbereitung (4), die an jedem statischen Schalter angeschlossen ist und einen Eingang besitzt, der mit der Steuerstufe verbunden ist, um das Signal Sc zu erhalten, einen weiteren Eingang, der mit der Steuerstufe verbunden ist, um die Kollektor/Emitterspannung $V_{CE}$ des betreffenden statischen Schalters abzunehmen, und einen Ausgang, der mit der Basis des besagten statischen Schalters verbunden ist, um dessen Schaltoperationen auszulösen, wobei infolge der Beschaffenheit der Aufbereitungszwischenstufe die Basis des besagten Schalters so gesteuert wird, daß der Schalter in dem einzigen Fall, in dem gleichzeitig das Steuersignal Sc einen dem Einschaltzustand entsprechend Wert aufweist und die Spannung $V_{CE}$ im Bereiche von Null ist, eingeschaltet und sichergestellt wird, daß in allem anderen Fällen zwecks Sperrung des Schalters umgekehrte Polarisation der besagten Schalterbasis staffindet, wobei

die besagte statische Umwandlungseinheit dadurch gekennzeichnet ist, daß die beiden Umformer (Γ) an den Klemmen einer gemeinsamen Hilfsausgangsstufe (39) in Brückenform angeordnet sind, und zwar so, daß jeder Umformer (Γ) dem anderen Umformer gegenüber einen Schaltkreis kapazitiver Art bildet und die besagte Hilfsausgangsstufe (39) mindestens einen Schaltkreis induktiver Art (40) umfaßt, der zwischen einerseits der Leistungsstufe (5) jedes Umformers (Γ) und andererseits an dem zum Anschluß an einer Last bestimmten Ausgang (S'') in Reihe geschaltet ist, wobei der besagte Schaltkreis induktiver Art so bemessen ist, daß er am Ausgang der Leistungsstufen (5) der Umformer (Γ) einen Wechselstrom bedingt, und zwar so, daß

. das Vorzeichen zwischen jeder Schaltoperation der statischen Schalter (7) geändert wird,

. und bei jedem Wechsel das Vorzeichen geboten wird, das im jedem statischen Schalter im Augenblick der Sperrung der mathematisch positiven Richtung des Kollektor-/Emitterflusses entspricht.

8. Eine Umwandlungseinheit im Einklang mit Anspruch 7, dadurch gekennzeichnet, daß die zusätzliche Ausgangsstufe (39) eine in der Brückendiagonale angeordnete Induktorspule (40) umfaßt, wobei das eine Ende der besagten Induktorspule oder ein Zwischenanschluß den zum Anschluß an eine Last bestimmten Ausgang (S'') der Einheit bildet.

9. Eine Umwandlungseinheit im Einklang mit Anspruch 8, dadurch gekennzeichnet, daß die Induktorspule (40) bei der Schaltfrequenz der Umformer (Γ) eine Impedanz von niedrigem Wert bildet, die so beschaffen ist, daß sie die Vorzeichenänderungen des Wechselstroms verursacht.

## Claims

1. A static electric energy conversion unit with semiconductors, with at least one converter (Γ) comprising:

. At least one power stage (5) possessing on the one hand two static switches for controlled blocking (7), each of them with a collector, a base and an emitter, and on the other hand an auxiliary switching circuit (9) linked with each static switch in order to branch off its collector current during the switching operations of the latter with a view to blocking, the two static switches being arranged in half-bridge fashion at the terminals of a power supply (+E, -E);

. a control stage (1) designed to generate for each static switch a control signal Sc in a form suitable for the required conversion;

. an intermediate processing stage (4) linked to each static switch and having an input connected to the command stage in order to receive the signal Sc, a second input connected to the power stage in order to detect the collector/emitter-voltage $V_{CE}$ of the static switch and an output connected to the base of the said static switch in order to initiate the latter's switching operations, the said intermediate processing stage being designed to control the base of the said switch in such a way as to make the switch conductive in the sol e case in which, simultaneously, the control signal Sc has a value corresponding to a state of switching on and the voltage $V_{CE}$ is close to zero and so as to ensure inverse polarisation of the said base of the switch in all the other cases with a view to blocking the switch,

the said static conversion unit being characterised in that each converter (Γ) is provided with a supplementary output stage (21, 30) combining two circuits, one of inductive type (23, 31), and the other of capacitive type (24, 25; 32, 33),

- the circuit of inductive type being connected in series between on the one hand the power stage (5) at the common point (c) of the two static switches (7) arranged in half-bridge fashion and on the other hand the output (S, S') which is to be connected to a load (22, 28),

- the circuit of capacitive type being connected in parallel between the output (S, S') and a voltage reference point selected in relation to the power supply (+E, -E),

- the said circuit of inductive type and the said circuit of capacitive type being so dimensioned as to give rise, at the output of the power stage (5), to an alternating current,

. changing the sign from switching operation to switching operation of the static switches (7),

. and presenting at every change the sign corresponding to the mathematically positive direction of collector/emitter flow in each static switch at the moment in which it is blocked.

2. A conversion unit in accordance with claim 1 characterised in that the supplementary output stage (21, 30) comprises:

. An inductance (23, 31) having one end connected to the output of the power stage (5), at the common point (C) of the two static switches (7) arranged in half-bridge fashion, and another end constituting the output (S, S') of the unit which is to be connected to a load,

. at least one capacitor (24, 25, 32, 33) each capacitor being connected between the output ( S, S') of the unit and a voltage reference point selected in relation to the power supply (+E, -E).

3. A conversion unit in accordance with claim 2 characterised in that each capacitor (24, 25, 32, 33) is connected to a reference point constituted by one of the power supply terminals.

4. A conversion unit in accordance with one of the claims 2 or 3 characterised in that the inductance (23, 31) presents, at the switching frequency of the converter (Γ), an impedance of low value suitable for causing the changes in sign of the alternating current.

5. A conversion unit in accordance with one of the claims 2, 3 or 4 characterised in that the capacitor or capacitors (24, 25) have a capacity of high value such as to cause their impedance at the switching frequency of the converter (Γ) to be negligible by comparison with the impedance of the load.

6. A conversion unit in accordance with one of the claims 2, 3 or 4 characterised in that the supplementary output stage (30) comprises:
. A first diode (34) having an anode connected to the output (S') and a cathode connected to the positive terminal (+E) of the power supply,
. a second diode (35) having an anode connected to the negative terminal (-E) of the power supply and a cathode connected to the output (S').

7. A static electric enery conversion unit with semiconductors having at least two converters (Γ), each of which comprises:.
. At least one power stage (5) possessing on the one hand two static switches for controlled blocking (7), each of them with a collector, a base and an emitter, and on the other hand an auxiliary switching circuit (9) linked with each static switch in order to branch off its collector current during the switching operations of the latter with a view to blocking, the two static switches being arranged in half-bridge fashion at the terminals of a power supply (+E, -E);
. a control stage (1) designed to generate for each static switch a control signal Sc in a form suitable for the required conversion;
. an intermediate processing stage (4) linked to each static switch and having an input connected to the command stage in order to receive the signal Sc, a second input connected to the power stage in order to detect the collector/emitter-voltage $V_{CE}$ of the static switch and an output connected to the base of the said static switch in order to initiate the latter's switching operations, the said intermediate processing stage being designed to control the hase of the said switch in such a way as to make the switch conductive in the sole case in which, simultaneously, the control signal Sc has a value corresponding to a state of switching on and the voltage $V_{CE}$ is close to zero and so as to ensure inverse polarisation of the said base of the switch in all the other cases with a view to blocking the switch,
the said static conversion unit being characterised in that the two converters (Γ) are arranged in bridge fashion at the terminals of a common supplementary output stage (39), in such a way that each converter (Γ) acts in relation to the other converter as a circuit of capacitive type, the said supplementary output stage (39) comprising at least one circuit of inductive type (40) connected in series between, on the one hand, the power stage (5) of each converter (Γ) and, on the other hand, the output (S'') which is to be connected to a load, the said circuit of inductive type being so dimensioned as to give rise, at the output of the power stages (5) of converters (Γ), to an alternating current:.
. Changing the sign from switching operation to switching operation of the static switches (7),
. and presenting at every change the sign corresponding to the mathematically positive direction of collector/emitter flow in each static switch at the moment in which it is blocked.

8. A conversion unit in accordance with claim 7 characterised in that the supplementary output stage (39) comprises an inductance (40) arranged in the diagonal of the bridge, with one of the ends of the said inductance or an intermediate connection constituting the output (S'') of the unit, which is to be connected to a load.

9. A conversion unit in accordance with claim 8 characterised in that the inductance (40) presents, at the switching frequency of the converters (Γ), an impedance of low value suitable for causing the changes in sign of the alternating current.

Fig. 1

Fig. 2

+E

20

Γ

-E

-VL-

24

S

25

Vm

Il

Vc

23

22

Ic

21

Fig.3a

Il

Ic

t

Fig.3b

Vm

Vc

t

Fig.3c

Vl

t

Fig. 4

Fig. 5a

Fig. 5b

Fig. 5c

Fig. 5d

Fig. 6

Fig. 7a

Fig. 7b

Fig. 7c

Fig. 7d